(19) Europäisches Patentamt
European Patent Office
Office européen des brevets

(11) **EP 0 729 037 B1**

(12) **FASCICULE DE BREVET EUROPEEN**

(45) Date de publication et mention
de la délivrance du brevet:
**04.07.2001 Bulletin 2001/27**

(51) Int Cl.7: **G01S 7/28**

(21) Numéro de dépôt: **96200366.1**

(22) Date de dépôt: **14.02.1996**

(54) **Sytème pour estimer des signaux reçus sous forme de signaux mélanges**

System zur Abschätzung von Empfangssignalen in einer Mischung von Signalen

System for estimating received signals in the form of mixed signals

(84) Etats contractants désignés:
**DE ES FR GB IT**

(30) Priorité: **22.02.1995 FR 9502051**

(43) Date de publication de la demande:
**28.08.1996 Bulletin 1996/35**

(73) Titulaire: **Koninklijke Philips Electronics N.V.
5621 BA Eindhoven (NL)**

(72) Inventeur: **Deville, Yannick
F-75008 Paris (FR)**

(74) Mandataire: **Landousy, Christian et al
Société Civile S.P.I.D.
156, Boulevard Haussmann
75008 Paris (FR)**

(56) Documents cités:
**WO-A-91/11037**

- **IEEE TRANSACTIONS ON SIGNAL PROCESSING, vol. 40, no. 12, Décembre 1992, pages 3074-3078, XP002004446 LACOUME ET AL.: "Separation of independent sources from correlated inputs"**
- **ELECTRONIC LETTERS, vol. 28, no. 21, 8 Octobre 1992, pages 1986-1987, XP000320360 CICHOCKI ET AL.: "NEW LEARNING ALGORITHM FOR BLIND SEPARATION OF SOURCES"**
- **PROCEEDINGS OF EUSIPCO-92 SIXTH EUROPEAN SIGNAL PROCESSING CONFERENCE, 24 - 27 Août 1992, BRUSSELS, BELGIUM, pages 739-742, XP002004447 CARDOSO: "Iterative Techniques for blind source separation using only fourth-order cumulants"**
- **IEEE SIGNAL PROCESSING WORKSHOP ON HIGHER-ORDER STATISTICS, 7 - 9 Juin 1993, SOUTH LAKE TAHOE, CA, USA, pages 215-219, XP002004448 MOREAU ET AL.: "New Self-Adaptive Algorithms for source separation based on contrast functions"**

## EP 0 729 037 B1

**Description**

L'invention concerne un système de séparation de sources pour traiter des signaux d'entrée formés par des mélanges linéaires instantanés de signaux primaires issus des sources et pour délivrer au moins un signal primaire estimé, les mélanges faisant intervenir des coefficients de mélange, le système comprenant des moyens de séparation de sources ayant une pluralité d'entrées reliées aux signaux d'entrée et au moins une sortie pour délivrer le signal primaire estimé, les moyens de séparation de sources déterminant adaptativement des coefficients de séparation servant à extraire les signaux primaires estimés.

Elle concerne également l'application d'un tel système à la réception de signaux électriques, sonores, électromagnétiques. Il peut s'agir par exemple d'une antenne, d'un autoradio, d'un téléphone mains libres.

On connaît la technique de séparation de sources de signaux primaires qui consiste à traiter des mélanges de signaux primaires pour fournir une estimation de chaque signal primaire. Ladite technique s'applique à des signaux primaires issus de sources indépendantes qui ne sont disponibles que sous forme desdits mélanges. Il peut s'agir de mélanges linéaires convolutifs ou de mélanges linéaires instantanés. Ils peuvent être engendrés par des mécanismes de propagation de signaux primaires et/ou par des mécanismes de superposition de signaux de plusieurs sources ou d'autres causes.

Dans le cas général, la technique de séparation de sources opère en aveugle, c'est-à-dire que les sources sont supposées inconnues, indépendantes, avec des mélanges inconnus. Pour cela on détecte plusieurs échantillons desdits mélanges à partir desquels la mise en oeuvre d'algorithmes de séparation permet de restituer une ou plusieurs estimations des signaux primaires d'origine.

Une telle technique, appliquée à la séparation de mélanges linéaires instantanés de signaux, est par exemple divulguée dans le document intitulé "Separation of Independent Sources from Correlated Inputs" de J.L.Lacoume et P.Ruiz, IEEE Transactions on Signal Processing, vol. 40, n° 12, décembre 1992, pages 3074 à 3078.

Pour effectuer la séparation de sources, c'est-à-dire obtenir en sortie une estimation de chaque source formant le mélange, ce document révèle une procédure de calcul de cumulants. Pour cela il enseigne d'adapter des paramètres du système de séparation de sources de façon à annuler des cumulants de signaux de sortie qui s'expriment en fonction de cumulants déterminés sur les signaux d'entrée issus des mélanges, les cumulants étant d'ordre supérieur à deux. En annulant ces cumulants, on déduit indirectement des coefficients de mélange inverse pour effectuer une transformée inverse de la transformée effectuée par l'application des opérations de mélange aux signaux primaires. L'enseignement de ce document conduit à donner au système de séparation de sources une structure directe. De plus, comme les signaux d'entrée sont statistiquement dépendants car issus de mélanges, les équations qui relient les cumulants des signaux de sortie aux cumulants des signaux d'entrée sont très complexes.

Une telle technique s'avère donc être complexe à mettre en oeuvre et ne fournit pas de solution simple dans le cas de signaux réels issus généralement de mélanges linéaires instantanés.

La demande internationale publiée sous le numéro 91/11037 décrit un procédé et dispositif de séparation en temps réel de signaux reçus par un nombre de capteurs prédéterminés, le mélange étant linéaire. Les signaux reçus sont d'abord décorrélés [s(t)], puis ils sont introduits dans un rotateur qui calcule, par une suite de rotations élémentaires $[Q^{(1)}, Q^{(2)}, ...Q^{(m)}]$ la matrice orthogonale (Q) permettant de retrouver les signaux-sources indépendants [x(t)] par multiplication (F) de cette matrice (Q) par les signaux d'entrée décorrélés [s(t)]. L'identification de (Q) est basée sur l'estimation de grandeurs statistiques appelées "cumulants".

Un but de l'invention est de simplifier le traitement conduisant à distinguer les sources en délivrant des signaux primaires estimés.

Ce but est atteint avec un système de séparation de sources qui comprend des moyens de caractérisation ayant une pluralité d'entrées reliée aux signaux d'entrée pour estimer, à partir de ceux-ci, les coefficients de mélange, et ayant au moins une sortie pour délivrer des coefficients estimés de mélange, les moyens de séparation ayant au moins une autre entrée pour recevoir les coefficients estimés de mélange, les moyens de séparation comprenant des moyens pour transformer les coefficients estimés de mélange en coefficients de séparation.

Avantageusement, on obtient une estimation des coefficients de mélange eux-mêmes et non pas celle des coefficients de mélange inverses. Cette propriété assure une séparation de sources beaucoup plus précise, les signaux primaires estimés étant plus proches des signaux primaires. De plus, les moyens de séparation de sources peuvent alors avoir une structure récursive qui est plus compacte.

Préférentiellement, les moyens de caractérisation comprennent des moyens d'estimation pour calculer, sur les signaux d'entrée, des estimations de cumulants d'ordre supérieur à deux et des moyens de calcul de coefficients estimés pour transformer les estimations desdits cumulants en coefficients estimés de mélange.

Avantageusement, on simplifie le traitement en établissant une relation entre les cumulants des signaux d'entrée et les cumulants des signaux de sources. Comme les sources sont statistiquement indépendantes, il s'ensuit que les équations sont bien plus simples, donc plus faciles à résoudre que dans l'art antérieur, ce qui nécessite des moyens de traitement moins importants.

Plus particulièrement, les moyens de calcul de coefficients estimés comprennent un réseau de neurones pour transformer, selon une fonction de transformation prédéterminée, les estimations desdits cumulants en coefficients estimés de mélange.

Un domaine intéressant d'utilisation de l'invention est celui dans lequel les sources de signaux primaires et/ou les récepteurs sont mobiles entraînant des conditions variables de transmission.

Ces différents aspects de l'invention et d'autres encore seront apparents et élucidés à partir des modes de réalisation décrits ci-après.

L'invention sera mieux comprise à l'aide des figures suivantes données à titre d'exemples non limitatifs qui représentent:

Figure 1 : un schéma d'un système de séparation de sources selon l'invention.

Figure 2 : un schéma d'une unité de caractérisation selon l'invention.

Figure 3 : un schéma d'une unité de séparation de sources selon l'invention comprenant une unité de transformation des coefficients estimés de mélange en coefficients de séparation.

Figure 4 : un schéma partiel d'un premier exemple de réalisation de l'unité de séparation dans le cas d'une structure directe.

Figure 5 : un schéma partiel d'un second exemple de réalisation de l'unité de séparation dans le cas d'une structure récursive.

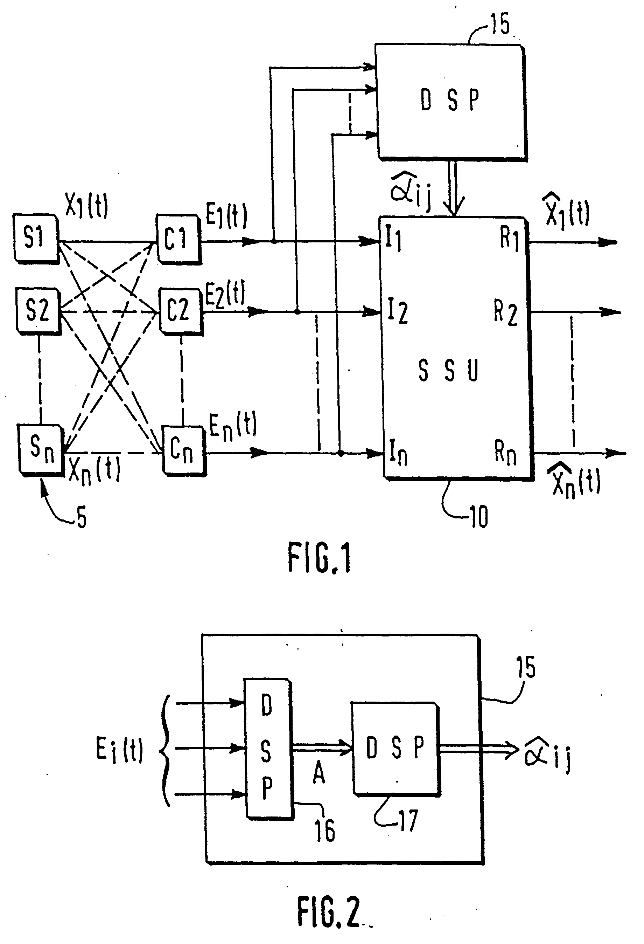

Sur la figure 1 sont représentées les sources primaires 5, S1 à Sn, constituées par exemple par différents émetteurs radiofréquences. Pour identifier et séparer ces émetteurs, on place des capteurs C1 - Cn en divers points de réception. Chacun de ces capteurs est par exemple une antenne suivie d'un amplificateur et d'un démodulateur. Les capteurs fournissent des signaux $E_1(t)$ à $E_n(t)$ issus de mélanges de signaux primaires $X_1(t)$ à $X_n(t)$ qui, soit sont délivrés directement par les sources S1 à Sn, soit servent à moduler des signaux diffusés par les sources S1 à Sn.

Les mélanges qui se produisent entre les signaux primaires sont directement liés à la propagation de ces signaux dans l'espace. Ces mélanges peuvent être rendus complètement ou approximativement linéaires et instantanés en utilisant des émetteurs et des capteurs adéquats notamment en choisissant les types de modulateurs et démodulateurs utilisés, ainsi que les fréquences de fonctionnement du système, par exemple en choisissant des émetteurs utilisant une modulation d'amplitude.

Sur la figure 1, les signaux détectés $E_1(t)$ à $E_n(t)$ entrent dans une unité 10 de séparation de sources qui délivre des signaux primaires estimés $X_1(t)$ à $X_n(t)$, la variable t étant par exemple le temps. Les signaux mélangés d'entrée $E_1(t)$ à $E_n(t)$ sont des mélanges linéaires instantanés issus, dans le cas général, de p signaux primaires inconnus $X_1(t)$ à $X_p(t)$ tels que :

$$(1) \qquad E_i(t) = \sum_j a_{ij} \, X_j(t)$$

avec $1 \le i \le n$ et $1 \le j \le p$, i et j étant des variables courantes. Sur la figure 1 on a n=p.

Ces signaux primaires-sont supposés statistiquement indépendants préférentiellement jusqu'à au moins l'ordre 4. Cette préférence peut être déplacée à au moins l'ordre 3 dans certains cas.

Les coefficients $a_{ij}$ sont des coefficients de mélange qui définissent les contributions du signal $X_j(t)$ vers le signal mélangé $E_i(t)$. Les coefficient de mélanges $a_{ij}$, qui sont inconnus, sont constants ou lentement variables.

Pour la suite de la description on définit des signaux normalisés primaires tels que:

$$Y_j(t) = a_{jj}.X_j(t) \text{ pour } 1 \le j \le p \qquad\qquad (2)$$

et des coefficients de mélange normalisés tels que:

$$\alpha_{ij} = a_{ij}/a_{jj} \text{ pour } i \ne j. \qquad\qquad (3)$$

Pour i=j, on a $\alpha_{ii} = \alpha_{jj} = 1$.

Après cette normalisation, l'équation (1) devient:

$$(4) \qquad E_i(t) = Y_i(t) + \sum_j \alpha_{ij} . Y_j(t)$$

pour $1 \leq i \leq n$, $1 \leq j \leq p$ et $j \neq i$.

Les coefficients normalisés $\alpha_{ij}$ de mélange seront par la suite appelés simplement coefficients de mélange.

Pour fournir des signaux primaires estimés $\hat{X}_k(t)$ à partir des signaux d'entrée $E_i(t)$, l'unité de séparation 10, dans le cas où elle possède une structure directe, met en oeuvre des coefficients de séparation $C_{ki}$. Elle délivre les signaux primaires estimés en effectuant la transformation inverse (k indice courant de sortie):

$$(5) \qquad \hat{X}_k(t) = \sum_i C_{ki} . E_i(t)$$

avec $1 \leq i \leq n$ et $1 \leq k \leq n$

Les coefficients de séparation $C_{ki}$ sont déterminés dans l'unité de séparation 10 à partir de coefficients estimés $\hat{\alpha}_{ij}$ de mélange qui constituent une estimation des coefficients $\alpha_{ij}$ de mélange qui sont inconnus. Cette estimation est effectuée dans une unité de caractérisation 15 qui, à partir des signaux d'entrée $E_i(t)$, délivre les coefficients estimés de mélange (figure 1).

D'une manière analogue, l'unité de séparation (10) peut avoir une structure récursive mettant en oeuvre des coefficients de séparation $d_{ki}$.

La figure 2 représente un schéma de l'unité de caractérisation 15. Elle comprend une unité d'estimation 16 suivie d'une unité 17 de calcul de coefficients estimés. L'unité d'estimation 16 reçoit l'ensemble des signaux d'entrée $E_i(t)$ et délivre une estimation d'un ensemble A de grandeurs caractéristiques des signaux d'entrée $E_i(t)$. Ces grandeurs caractéristiques de l'ensemble A sont choisies pour qu'il soit possible premièrement de les calculer à partir des signaux d'entrée $E_i(t)$, et deuxièmement de les exprimer en faisant intervenir les coefficients de mélange $\alpha_{ij}$ et un ensemble B de grandeurs caractéristiques se rapportant aux signaux primaires normalisés $Y_j(t)$ bien que ceux-ci soient inconnus, les grandeurs caractéristiques de l'ensemble B étant de même nature que les grandeurs caractéristiques de l'ensemble A.

Dans la suite de la description les grandeurs caractéristiques choisies vont être des cumulants calculés à partir des signaux mélangés $E_i(t)$.

Les relations qui relient l'ensemble A et l'ensemble B par l'intermédiaire des coefficients de mélange constituent une propriété intrinsèque du système décrit. Selon l'invention, l'unité d'estimation 16 détermine une estimation de l'ensemble A, estimation suffisante pour qu'il soit possible d'en déduire des coefficients estimés $\hat{\alpha}_{ij}$ de mélange dans l'unité 17 de calcul de coefficients estimés.

Selon un mode préférentiel de réalisation, les grandeurs caractéristiques constituant l'ensemble A sont des auto-cumulants associés à chaque signal mélangé $E_i(t)$ préalablement centré, ainsi que des cumulants croisés associés à chaque couple de signaux mélangés $E_f(t)$ et $E_g(t)$ préalablement centrés (f et g étant des indices entiers courants, $1 \leq f \leq n$, $1 \leq g \leq n$). De manière analogue, les grandeurs caractéristiques constituant l'ensemble B sont des auto-cumulants associés à chaque signal primaire normalisé $Y_i(t)$ préalablement centré. La définition de ces grandeurs est en soi bien connue de l'homme du métier.

Selon l'invention, on considère les cumulants (auto et croisés) d'ordre supérieur à 2. Les cumulants les plus faciles à calculer sont ceux qui ont l'ordre-le plus faible. Néanmoins les cumulants d'ordre trois doivent être suffisamment grands pour que le calcul se limite à ces seuls cumulants. Cette condition ne se rencontre que pour un nombre limité de types de sources. Préférentiellement, selon l'invention, on calcule les cumulants d'ordre 4 ce qui permet de couvrir une plus large gamme de signaux rencontrés expérimentalement. L'homme du métier peut choisir des cumulants ayant un ordre différent sans sortir du cadre de l'invention.

Dans un souci de clarté, un rappel des définitions des cumulants est fourni ci-après en se limitant aux seuls cumulants nécessaires à l'exemple traité, c'est-à-dire aux auto-cumulants et aux cumulants croisés d'ordre 4, en se limitant à deux signaux, et sans faire intervenir de décalage temporel entre les deux signaux considérés.

Dans le cas général, considérons deux signaux U(t) et V(t) qui varient en fonction d'une variable t, par exemple le temps. On définit des signaux centrés par:

$$u(t) = U(t) - E\{U(t)\} \qquad\qquad (6)$$

$$v(t) = V(t) - E\{V(t)\} \qquad\qquad (7)$$

Dans les équations ci-dessus la notation E{.} représente l'espérance mathématique de l'expression entre parenthèses.

Les cinq cumulants d'ordre 4 associés à ces signaux centrés sont (en abrégeant par u et v respectivement les signaux u(t) et v(t)):

$$\text{cum4}(u) = \text{cum}(u,u,u,u) = E\{u^4\} - 3[E\{u^2\}]^2 \tag{8}$$

$$\text{cum31}(u,v) = \text{cum}(u,u,u,v) = E\{u^3 v\} - 3E\{u^2\}\,E\{uv\} \tag{9}$$

$$\text{cum22}(u,v) = \text{cum}(u,u,v,v) = E\{u^2 v^2\} - E\{u^2\}E\{v^2\} - 2[E\{uv\}]^2 \tag{10}$$

$$\text{cum31}(v,u) = \text{cum}(u,v,v,v) = E\{v^3 u\} - 3E\{v^2\}E\{uv\} \tag{11}$$

$$\text{cum4}(v) = \text{cum}(v,v,v,v) = E\{v^4\} - 3[E\{v^2\}]^2 \tag{12}$$

Dans la pratique on ne calcule pas les cumulants exacts, mais seulement des cumulants estimés. Différentes techniques sont connues de l'homme de métier pour calculer des cumulants. A titre d'exemple, deux méthodes seulement sont fournies ci-après.

Une première méthode, simple pour le calcul de cumulants, consiste à effectuer les opérations suivantes:

1. Dans une fenêtre temporelle, prélever M échantillons pour chaque signal U(t) et V(t).

2. A partir de ces échantillons, effectuer des estimations des espérances mathématiques des signaux U(t) et V(t) en calculant deux estimateurs <U> et <V>. Chaque estimateur est par exemple la moyenne arithmétique du signal considéré calculée sur les M échantillons prélevés. Ces estimateurs <U> et <V> sont des nombres réels.

3. A partir des équations 6 et 7 et des estimateurs <U> et <V>, on déduit des estimateurs <u(t)> et <v(t)> se rapportant aux signaux centrés u(t) et v(t). Ces seconds estimateurs contiennent M échantillons qui sont, par exemple, calculés de la manière suivante. On calcule l'estimateur respectif <u(t)> ou <v(t)> des signaux centrés u(t) ou v(t) en soustrayant de chaque échantillon du signal initial U(t), respectivement V(t), l'estimateur <U> de l'espérance mathématique E{U(t)}, respectivement l'estimateur <V> de l'espérance mathématique E{V(t)}. [équations 6 et 7 appliquées aux estimateurs].

4. On applique la même méthode de calcul pour les estimateurs de toutes les espérances mathématiques qui figurent dans les équations 8 à 12. Par exemple, l'estimateur de $E\{u^4\}$ sera obtenu en calculant la moyenne arithmétique de $[<u(t)>]^4$ sur M échantillons. De même pour les autres espérances mathématiques à calculer.

5. On en déduit une estimation pour chaque cumulant défini par les équations 8 à 12 en remplaçant les espérances mathématiques par leurs valeurs estimées respectives.

On peut obtenir une plus grande précision dans l'estimation des cumulants en appliquant une seconde méthode qui consiste à subdiviser la fenêtre contenant les M échantillons en plusieurs sous-fenêtres. La première méthode est appliquée pour chaque sous-fenêtre pour délivrer des cumulants partiels. On calcule ensuite les cumulants pour l'ensemble des M échantillons (équations 8 à 12) en calculant les moyennes arithmétiques des cumulants partiels.

D'autres méthodes de calcul des cumulants peuvent être mises en oeuvre.

Afin de bien faire comprendre l'invention, considérons, à titre d'exemple, le cas simple de la séparation de 2 sources en utilisant 2 capteurs. Dans cet exemple, seuls seront considérés les auto-cumulants et les cumulants croisés d'ordre 4. On détecte deux signaux $E_1(t)$ et $E_2(t)$ qui, après avoir été centrés, deviennent les signaux $e_1(t)$ et $e_2(t)$. De même, $y_1(t)$ et $y_2(t)$ sont les signaux centrés correspondant aux signaux normalisés $Y_1(t)$ et $Y_2(t)$ supposés indépendants.

En appliquant ce qui a été exposé précédemment on obtient les 5 équations suivantes:

$$\text{cum4}(e1) = \text{cum4}(y1) + \alpha^4_{12}\,\text{cum4}(y2) \tag{13}$$

$$\text{cum31(el,e2)} = \alpha_{21}\ \text{cum4(y1)} + \alpha^3_{12}\ \text{cum4(y2)} \qquad (14)$$

$$\text{cum22(e1,e2)} = \alpha^2_{21}\ \text{cum4(y1)} + \alpha^2_{12}\ \text{cum4(y2)} \qquad (15)$$

$$\text{cum31(e2,e1)} = \alpha^3_{21}\ \text{cum4(y1)} + \alpha_{12}\ \text{cum4(y2)} \qquad (16)$$

$$\text{cum4(e2)} = \alpha^4_{21}\ \text{cum4(y1)} + \text{cum4(y2)} \qquad (17)$$

Ces équations renferment:

i) les éléments de l'ensemble A déjà défini, c'est-à-dire les éléments caractérisant les signaux fournis par les capteurs, à savoir: cum4(e1), cum31(e1,e2), cum22(e1,e2), cum31(e2,e1), cum4(e2).
ii) les éléments de l'ensemble B déjà défini, c'est-à-dire les éléments caractérisant les signaux primaires normalisés, à savoir: cum4(y1), cum4(y2) qui sont inconnus.
iii) deux coefficients de mélange inconnus: $\alpha_{12}$, $\alpha_{21}$.

Disposant de cinq équations, il est donc théoriquement possible de déterminer les éléments inconnus.
Dans le cas de plus de deux sources, avec un nombre de capteurs égal au nombre de sources, les cumulants cum4 (équations 13 et 17) et les cumulants cum31 (équations 14 et 16) par exemple se généralisent respectivement tels que :

$$(18) \quad cum4(e_r) = cum4(y_r) + \sum_{j=1;\ j\neq r}^{n} \alpha^4_{rj}\ cum4(y_j)$$

$$(19) \quad cum31(e_r,\ e_s) = \alpha_{sr}cum4(y_r) + \alpha^3_{rs}cum4(y_s) + \sum_j \alpha^3_{rj}\alpha_{sj}cum4(y_j)$$

avec $1\leq j\leq n$, $j\neq r$ et $j\neq s$, et $1\leq r\leq n$, $1\leq s\leq n$, et *r≠s,r,s* étant des variables entières courantes.
Le but de ce calcul (cas à deux sources et deux capteurs) est de déterminer les coefficients de mélanges $\alpha_{12}$, $\alpha_{21}$. En réalité, le calcul est conduit pour déterminer uniquement des estimations des coefficients de mélange $\alpha_{12}$, $\alpha_{21}$ sous forme de coefficients estimés $\hat{\alpha}_{12}$, $\hat{\alpha}_{21}$.
Le calcul des coefficients estimés $\alpha_{12}$, $\alpha_{21}$ est effectué dans l'unité de caractérisation (15) représentée sur la figure 2. Premièrement, l'unité d'estimation (16) détermine les estimations des cumulants des signaux mélangés, puis l'unité (17) de calcul de coefficients estimés délivre les coefficients estimés $\hat{\alpha}_{12}$, $\alpha_{21}$.
L'unité d'estimation (16) calcule les cumulants cum4(e1) à cum4(e2) selon les équations 8 à 12. L'unité d'estimation DSP peut être constituée d'un calculateur, d'un microprocesseur ou d'une unité de traitement numérique du signal. Lorsque tous les cumulants précédents ont été calculés, ils sont traités par l'unité de calcul de coefficients 17 qui calcule les coefficients de mélange $\alpha_{12}$ et $\alpha_{21}$ à partir des équations 13 à 17. En réalité, la résolution de ces équations fournit non pas les coefficients vrais $\alpha_{12}$ et $\alpha_{21}$ mais des valeurs proches constituant les coefficients estimés $\hat{\alpha}_{12}$ *et* $a_{21}$ du fait que ce sont des cumulants estimés et non pas des cumulants exacts qui sont utilisés pour résoudre les équations 13 à 17.
L'unité de calcul de coefficients 17 peut elle aussi être constituée d'un calculateur, d'un microprocesseur ou d'un dispositif de traitement numérique du signal appliquant une méthode de résolution d'équations.
Pour résoudre ces équations, il est possible d'utiliser des méthodes de résolution d'équations non-linéaires qui sont connues de l'homme de métier. Il peut s'agir des méthodes de Gauss-Newton, de Levenberg-Marquardt, de Powell-Fletcher ou des méthodes de descente de gradient classiques.
Une autre approche consiste à réduire le nombre d'équations en combinant entre elles les équations 13 à 17. On obtient ainsi les équations suivantes:

$$\alpha_{21}^3 cum4(e_1)+\alpha_{12}cum4(e_2)-\alpha_{21}^3\alpha_{12}cum31(e_1,e_2)-cum31(e_2,e_1) =0 \qquad (20)$$

$$\alpha_{21}cum4(e_1)+\alpha_{12}^3 cum4(e_2)-cum31(e_1,e_2)-\alpha_{12}^3\alpha_{21}cum31(e_2,e_1) =0 \qquad (21)$$

L'unité de calcul des coefficients 17 est alors programmée pour résoudre les équations 20 et 21 par exemple à l'aide d'une des méthodes connues indiquées préalablement.

Il est possible de combiner ces deux équations pour ne conserver que des équations renfermant un seul coefficient de mélange $\alpha_{12}$ ou $\alpha_{21}$ plus faciles à résoudre.

Une autre approche peut consister non pas à résoudre exactement le système d'équations 13 à 17 comme cela vient d'être dit, mais à se limiter à réaliser une approximation de la fonction qui relie les cumulants estimés calculés aux coefficients estimés $\alpha_{ij}$ de mélange qui sont à déterminer. En effet, d'une manière globale, les équations 13 à 17 peuvent s'écrire sous la forme:

$$\alpha_{ij} = F(A). \qquad (22)$$

L'équation 22 n'a pour objet que de relier les coefficients inconnus $\alpha_{ij}$ avec l'ensemble A sans prendre en considération l'ensemble B qui, bien qu'inconnu également, n'est pas à déterminer.

Si G(.) est une fonction qui constitue une approximation de F(.) et si G(.) est plus facile à mettre en oeuvre expérimentalement, on peut alors se limiter à calculer:

$$\hat{\alpha}_{ij} = G(A) \qquad (23)$$

Cette fonction F(.) est caractéristique du nombre de signaux primaires et de capteurs nécessaires à la mise en oeuvre de l'application considérée. Ceci constitue un avantage car le système est par lui-même indépendant des autres paramètres de l'application. On conçoit aisément que l'unité de calcul de coefficients 17 peut subir préalablement dans une première phase un apprentissage pour résoudre la fonction F(.). Dans une seconde phase, les données mesurées expérimentalement peuvent être traitées selon la méthode apprise. Or, il est connu qu'il est possible d'obtenir une approximation d'une fonction F(.) par une fonction G(.) en utilisant un réseau de neurones multicouches ou un perceptron multicouches ou un réseau de neurones en arbre.

L'utilisation d'un réseau de neurones est particulièrement intéressante car elle ne nécessite pas de résoudre, à chaque fois, pour chaque lot de cumulants, les équations 13 à 17 dans le système de séparation lui-même. Il suffit que le réseau de neurones apprenne préalablement à résoudre la fonction G(.) pour ensuite l'utiliser pour chaque lot de cumulants, le système de séparation de sources devenant ainsi dédié au type de fonction G(.) appris. Pour adapter le système de séparation de sources à un nombre de capteurs ou à un nombre de signaux primaires à séparer différent, il suffit de faire réapprendre au réseau de neurones la nouvelle fonction G(.) relative à ce nombre nouveau de capteurs et/ou à ce nombre nouveau de signaux primaires. Pour générer la base d'exemples nécessaires à l'apprentissage, on choisit des valeurs arbitraires d'autocumulants de signaux primaires et des valeurs arbitraires de coefficients de mélanges normalisés $\alpha_{ij}$ (membres de droite des équations 13 à 17). A l'aide de ces équations, on calcule les autocumulants et les cumulants croisés des signaux mélangés (membre de gauche desdites équations). Puis on introduit ces cumulants des signaux mélangés sur les entrées du réseau de neurones et on impose que ses sorties délivrent les coefficients de mélanges normalisés $\alpha_{ij}$ préalablement choisis. Ces coefficients délivrés $\alpha_{ij}$ constituent les résultats à obtenir en sortie du réseau de neurones. L'apprentissage du réseau de neurones va donc consister à déterminer les coefficients synaptiques du réseau de neurones pour approximer la correspondance signaux d'entrée/signaux de sortie du réseau de neurones conformément aux résultats des équations 13 à 17 précalculés. Ceci présente l'avantage de ne pas avoir à résoudre les équations complexes 13 à 17.

Les coefficients estimés $\alpha_{ij}$ de mélange ainsi calculés sont entrés dans l'unité 10 de séparation de sources pour démêler les signaux d'entrée $E_i(t)$ et fournir des signaux primaires estimés $\hat{X}_k(t)$.

La séparation de sources effectuée par l'unité 10 de séparation de sources peut s'écrire sous la forme :

$$(24) \qquad \hat{X}_k(t) = \sum_{i=1}^{n} C_{ki}.E_i(t)$$

pour une structure directe, et

$$(25) \qquad \hat{X}_k(t) = E_k(t) - \sum_{\substack{i=1 \ i \neq k}}^{n} d_{ki} \cdot \hat{X}_i(t)$$

pour une structure récursive.

Les coefficients $C_{ki}$, $d_{ki}$ sont des coefficients de séparation qui sont déduits des coefficients estimés $\hat{\alpha}_{ij}$ de mélange qui entrent dans l'unité 10 de séparation.

La transformation des coefficients estimés de mélanges $\hat{\alpha}_{ij}$ en coefficients de séparation $C_{ki}$, $d_{ki}$ dépend de la structure directe ou récursive de l'unité 10 de séparation.

Lorsque l'unité 10 de séparation possède une structure récursive, on peut être conduit à effectuer l'une ou l'autre des transformations suivantes :

$$d_{ki} = \hat{\alpha}_{ki} \text{ ou } d_{ki} = a_{k,\alpha(i)}/a_{i,\alpha(i)}. \qquad (26)$$

La première de ces transformations correspond au cas où le signal primaire estimé correspondant au signal primaire de kième rang se retrouve sur la kième sortie de l'unité de séparation.

Mais il peut apparaître des cas où des problèmes de stabilité ne permettent pas d'assurer cette correspondance. Il peut alors être nécessaire de faire que le signal primaire estimé correspondant au signal primaire de kième rang soit délivré par une autre sortie de l'unité de séparation. Il faut alors déterminer des coefficients de séparation $d_{ki}$ appropriés permettant d'effectuer cette permutation. C'est l'objet de la seconde transformation qui fait intervenir sur les indices une loi de permutation $\sigma(i)$.

Dans le cas de deux sources, avec deux coefficients estimés $\hat{\alpha}_{12}$ et $\hat{\alpha}_{21}$, les coefficients de séparation $d_{ki}$ sont choisis tels que :

$$\text{- si } \hat{\alpha}_{12} \cdot \hat{\alpha}_{21} \leq 1, \text{ on a } d_{12} = \hat{\alpha}_{12} \text{ et } d_{21} = \hat{\alpha}_{21}. \qquad (27)$$

pour la première transformation, et

$$\text{- si } \hat{\alpha}_{12} \cdot \hat{\alpha}_{21} > 1, \text{ on a } d_{12} = 1/\hat{\alpha}_{21} \text{ et } d_{21} = 1/\hat{\alpha}_{12}. \qquad (28)$$

pour la seconde transformation.

Lorsque l'unité 10 de séparation de sources possède une structure directe, il faut faire une inversion de matrice telle que :

$$(29) \qquad C_{kj} + \sum_{i=1, i \neq j}^{n} C_{ki} \cdot \hat{\alpha}_{ij} = 0 \qquad \begin{array}{l} 1 \leq k \leq n \\ 1 \leq j \leq n, j \neq k, \end{array}$$

avec $C_{kk} = 1$.

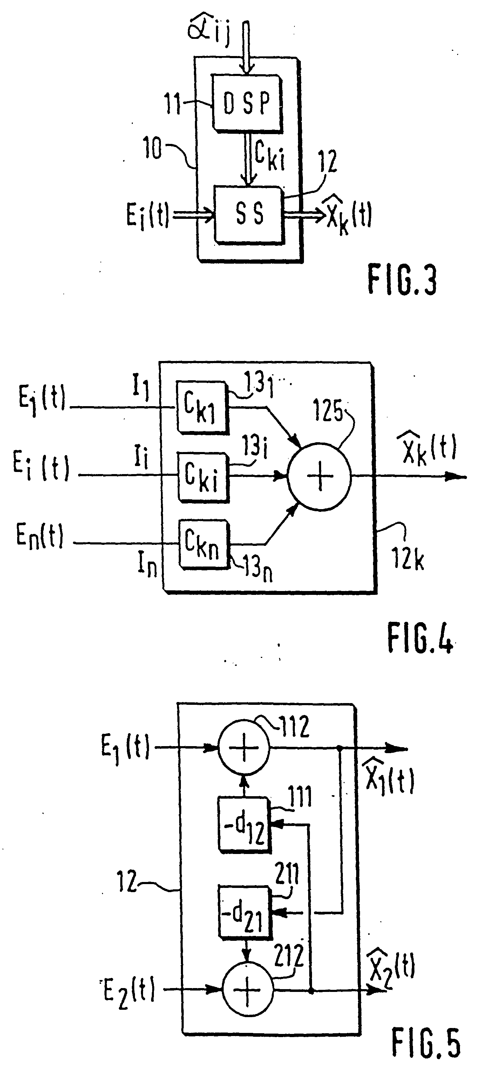

Les transformations des équations 26 à 28 dans le cas de la structure récursive ou l'inversion de matrice de l'équation 29 dans le cas de la structure directe sont réalisées dans l'unité DSP de transformation 11, par exemple un calculateur, un microprocesseur ou une unité de traitement numérique du signal. Dans ce cas (figure 3), l'unité 10 de séparation de sources comprend l'unité de transformation 11 qui transforme les coefficients estimés $\hat{\alpha}_{ij}$ de mélanges en coefficients de séparation $C_{ki}$, $d_{ki}$ et une sous-unité 12 de séparation proprement dite qui reçoit, sur une pluralité d'entrées, les signaux mélangés $E_i(t)$ et qui délivre au moins un signal primaire estimé $\hat{X}_k(t)$. Les coefficients de séparation $C_{ki}$, $d_{ki}$ arrivant sur une autre pluralité d'entrées.

La figure 4 représente une partie d'une sous-unité de séparation $12_k$ à structure directe. Elle comprend une pluralité d'entrées $I_1$ à $I_n$ chacune recevant un signal mélangé $E_1(t)$ à $E_n(t)$. Chacune de ces entrées est reliée à un moyen de multiplication $13_1$ à $13_n$ dudit signal par le coefficient de séparation $C_{k1}$ à $C_{kn}$ affecté à l'entrée. Les sorties de tous les moyens de multiplication $13_1$ à $13_n$ sont reliés à un sommateur 125 pour additionner tous les signaux et délivrer le signal primaire estimé $\hat{X}_k(t)$. La sous-unité de séparation 12 (figure 3) contient autant de sous-unités partielles $12_k$ que de signaux primaires estimés $X_k(t)$.

La figure 5 représente une sous-unité de séparation 12 ayant une structure récursive pour un exemple destiné à délivrer deux signaux primaires estimés $X_1(t)$ et $X_2(t)$ à partir de deux signaux mélangés $E_1(t)$ et $E_2(t)$. Cette structure comprend un premier sommateur 112 ayant une entrée reliée au signal $E_1(t)$ et une sortie qui délivre le signal primaire estimé $\hat{X}_1(t)$. Un second sommateur 212 a une entrée reliée au signal $E_2(t)$ et une sortie qui délivre le signal primaire estimé $X_2(t)$. Une autre entrée du premier sommateur 112 est reliée à la sortie du second sommateur 212 à travers un moyen de multiplication 111 qui pondère le signal de sortie du second sommateur par un coefficient $-d_{12}$. De la même manière, une autre entrée du second sommateur 212 est reliée à la sortie du premier sommateur 112 à travers un autre moyen de multiplication 211 qui pondère le signal de sortie du premier sommateur par un coefficient $-d_{21}$. Les sommateurs 112, 212 et les moyens de multiplication 111, 211 peuvent faire partie d'un calculateur, d'un microprocesseur ou d'une unité de traitement numérique du signal correctement programmé pour réaliser les fonctions décrites.

**Revendications**

1. Système de séparation de sources pour traiter des signaux d'entrée ($E_1(t)..E_n(t)$) formés par des mélanges linéaires instantanés de signaux primaires ($X_1(t)..X_n(t)$) issus des sources ($S_1..S_n$) et pour délivrer au moins un signal primaire estimé ($\hat{X}_1(t)$), les mélanges faisant intervenir des coefficients de mélange, le système comprenant des moyens (10) de séparation de sources ayant une pluralité d'entrées ($I_1..I_n$) reliées aux signaux d'entrée ($E_1(t)..E_n(t)$) et au moins une sortie ($R_1$) pour délivrer le signal primaire estimé($X_1(t)$), les moyens (10) de séparation de sources déterminant adaptativement des coefficients de séparation ($C_{k1}..C_{kn}$) servant à extraire les signaux primaires estimés caractérisé en ce que le système comprend des moyens (15) de caractérisation ayant une pluralité d'entrées reliée aux signaux d'entrée ($E_1(t)..E_n(t)$) pour estimer, à partir de ceux-ci, les coefficients de mélange, et ayant au moins une sortie pour délivrer des coefficients estimés de mélange ($\hat{\alpha}_{ij}$), les moyens (10) de séparation ayant au moins une autre entrée pour recevoir les coefficients estimés de mélange ($\hat{\alpha}_{ij}$), les moyens (10) de séparation comprenant des moyens (11) pour transformer les coefficients estimés de mélange ($\hat{\alpha}_{ij}$) en coefficients de séparation ($C_{ki}$).

2. Système selon la revendication 1 caractérisé en ce que les moyens (15) de caractérisation comprennent des moyens (16) d'estimation pour calculer, sur les signaux d'entrée, des estimations de cumulants d'ordre supérieur à deux et des moyens (17) de calcul de coefficients estimés pour transformer les estimations desdits cumulants en coefficients estimés de mélange ($\hat{\alpha}_{ij}$).

3. Système selon la revendication 2 caractérisé en ce que les moyens (17) de calcul de coefficients estimés comprennent un réseau de neurones pour transformer, selon une fonction de transformation prédéterminée, les estimations desdits cumulants en coefficients estimés de mélange ($\hat{\alpha}_{ij}$).

4. Système selon les revendications 2 ou 3 caractérisé en ce que les moyens (10) de séparation sont des moyens (12K) à structure directe, les moyens (10) de séparation comprenant une unité de transformation (11) des coefficients estimés de mélange ($\hat{\alpha}_{ij}$) en coefficients de séparation ($C_{Ki}$) adaptés à la structure directe.

5. Système selon les revendications 2 ou 3 caractérisé en ce que les moyens (10) de séparation sont des moyens (12) à structure récursive, les moyens (10) de séparation comprenant une unité de transformation des coefficients estimés de mélange ($\hat{\alpha}_{ij}$) en coefficients de séparation ($-d_{12}$, $-d_{21}$) adaptés à la structure récursive.

6. Méthode de séparation de sources pour traiter des signaux d'entrée ($E_1(t)..E_n(t)$) formés par des mélanges linéaires instantanés de signaux primaires ($X_1(t)..X_n(t)$) issus des sources ($S_1..S_n$) et pour délivrer au moins un signal primaire estimé ($\hat{X}_1(t)$), les mélanges faisant intervenir des coefficients de mélange, la méthode s'effectuant à l'aide de moyens (10) de séparation de sources ayant une pluralité d'entrées ($I_1..I_n$) reliées aux signaux d'entrée ($E_1(t)..E_n(t)$) et au moins une sortie ($R_1$) pour délivrer le signal primaire estimé ($X_1(t)$), la méthode comprenant une étape de calcul de coefficients de séparation ($C_{k1}..C_{kn}$) servant à extraire les signaux primaires estimés, caractérisé en ce que la méthode comprend :

   - une étape (15) d'estimation pour estimer les coefficients de mélange à partir des signaux d'entrée ($E_1(+)..E_n(+)$) afin d'obtenir des coefficients estimés de mélange ($\hat{\alpha}_{ij}$); et
   - une étape (11) de transformation pour transformer les coefficients estimés de mélange ($\hat{\alpha}_{ij}$) en coefficients de séparation ($C_{ki}$).

**Patentansprüche**

1. System zur Trennung von Quellen für die Verarbeitung von Empfangssignalen ($E_1(t)..E_n(t)$) in momentanen linearen Mischungen von Primärsignalen ($X_1(t)..X_n(t)$) aus diesen Quellen ($S_1..S_2$) und zum Liefern mindestens eines abgeschätzten Primärsignals ($X_1(t)$) unter Verwendung von Mischungskoeffizienten bei den Mischungen, ein System mit Vorrichtung (10) zur Trennung der Quellen mit einer Vielzahl, mit den Empfangssignalen ($E_1(t)..E_n(t)$) verbundenen Eingängen ($I_1..I_n$) und mindestens einem Ausgang ($R_1$) zum Liefern des abgeschätzten Primärsignals ($X_1(t)$), wobei die Vorrichtung (10) zur Trennung der Quellen unter adaptiver Bestimmung der Trennungskoeffizienten ($C_{kl}..C_{kn}$) für die Entnahme der abgeschätzten Primärsignale dient, dadurch gekennzeichnet, daß das System eine Vorrichtung (15) zur Charakterisierung enthält, mit einer Vielzahl, mit den Empfangssignalen ($E_1(t)..E_n(t)$) verbundenen Eingängen, um davon die Mischungskoeffizienten abzuschätzen, und mindestens einem Ausgang, um die abgeschätzten Mischungskoeffizienten ($\hat{\alpha}_{ij}$) zu liefern der, wobei die Vorrichtung (10) zur Trennung mindestens einen weiteren Eingang hat, um die abgeschätzten Mischungskoeffizienten ($\hat{\alpha}_{ij}$) zu empfangen, und die Vorrichtung (10) zur Trennung eine Vorrichtung (11) zur Transformation der abgeschätzten Mischungskoeffizienten ($\hat{\alpha}_{ij}$) in Trennungskoeffizienten ($C_{Ki}$) aufweist.

2. System nach Anspruch 1, dadurch gekennzeichnet, daß die Vorrichtung (15) zur Charakterisierung eine Vorrichtung (16) zur Abschätzung aufweist, um an den Empfangssignalen Kumulationsabschätzungen einer Größenordnung über zwei zu berechnen, und eine Vorrichtung (17) zur Berechnung der abgeschätzten Koeffizienten, um die Abschätzungen der besagten Kumulationen in abgeschätzte Mischungskoeffizienten ($\hat{\alpha}_{ij}$): zu transformieren.

3. System nach Anspruch 2, dadurch gekennzeichnet, daß die Vorrichtung (17) zur Berechnung der abgeschätzten Koeffizienten über ein neuronales Netzwerk verfügt, um die Abschätzungen der besagten Kumulationen nach einer vorbestimmten Transformationsfunktion in abgeschätzte Mischungskoeffizienten ($\hat{\alpha}_{ij}$): zu transformieren.

4. System nach Anspruch 2 oder 3, dadurch gekennzeichnet, daß die Vorrichtung (10) zur Trennung eine Vorrichtung (12K) direkter Struktur ist, während die Vorrichtung (10) zur Trennung eine Einheit (11) zur Transformation der abgeschätzten Mischungskoeffizienten ($\hat{\alpha}_{ij}$) in Trennungskoeffizienten ($C_{Ki}$), der direkten Struktur angepaßt, aufweist.

5. System nach Anspruch 2 oder 3, dadurch gekennzeichnet, daß die Vorrichtung (10) zur Trennung eine Vorrichtung (12) rekursiver Struktur ist, während die Vorrichtung (10) zur Trennung eine Einheit zur Transformation der abgeschätzten Mischungskoeffizienten ($\hat{\alpha}_{ij}$) in Trennungskoeffizienten ($-d_{12}$, $-d_{21}$), der rekursiven Struktur angepaßt, aufweist.

6. Methode zur Trennung von Quellen für die Verarbeitung von Empfangssignalen ($E_1(t)..E_n(t)$) in momentanen linearen Mischungen von Primärsignalen ($X_1(t)..X_n(t)$) aus diesen Quellen ($S_1..S_2$) und zum Liefern mindestens eines abgeschätzten Primärsignals ($X_1(t)$) unter Verwendung von Mischungskoeffizienten bei den Mischungen, eine Methode mit Vorrichtung (10) zur Trennung der Quellen mit einer Vielzahl, mit den Empfangssignalen ($E_1(t)..E_n(t)$) verbundenen Eingängen ($I_1..I_n$) und mindestens einem Ausgang ($R_1$) zum Liefern des abgeschätzten Primärsignals ($X_1(t)$), wobei die Methode einen Schritt zur Berechnung der Trennungskoeffizienten ($C_{kl}..C_{kn}$) enthält, der für die Entnahme der abgeschätzten Primärsignale dient, dadurch gekennzeichnet, daß sie besteht aus:

   - einem Abschätzungsschritt (15), um die Mischungskoeffizienten anhand der Empfangssignale ($E_1(+)..E_n(+)$) abzuschätzen, um die abgeschätzten Mischungskoeffizienten ($\hat{\alpha}_{ij}$) zu erhalten; und
   - einem Transformationsschritt (11), um die abgeschätzten Mischungskoeffizienten ($\hat{\alpha}_{ij}$) in Trennungskoeffizienten ($C_{ki}$) zu transformieren.

**Claims**

1. A source separation system for processing input signals ($E_1(t) .. E_n(t)$) formed by instantaneous linear mixtures of primary signals ($x_1(t) ... x_n(t)$) that result from sources ($S_1, ... S_n$) and for producing at least one estimated primary signal ($X_1(t)$), which mixtures cause mixing coefficients to occur, the system comprising source separation means (10) which have a number of inputs ($I_1 ... I_n$) connected to the input signals ($E_1(t) ..E_n(t)$) and at least one output ($R_1$) for producing the estimated primary signal ($X_1(t)$), the source separation means (10) adaptively determining separation coefficients ($C_{kl}..C_{kn}$) used for extracting the estimated primary signals, characterized in that the system comprises characterization means (15) which have a number of inputs connected to the input signals ($E_1(t)..E_n$

(t)) for estimating the mixing coefficients based upon these signals, and have at least one output for producing estimated mixing coefficients $(\hat{\alpha}_{ij})$, while the separation means (10) have at least one further input for receiving the estimated mixing coefficients $(\hat{\alpha}_{ij})$, and comprise means (11) for transforming the estimated mixing coefficients $(\hat{\alpha}_{ij})$ into separation coefficients $(C_{ki})$.

2. A system as claimed in Claim 1, characterized in that the characterization means (15) comprise estimating means (16) for making estimates of cumulants of a higher order than the second order based upon the input signals, and calculating means (17) for calculating estimated coefficients for transforming the estimates of said cumulants into estimated mixing coefficients $(\hat{\alpha}_{ij})$.

3. A system as claimed in Claim 2, characterized in that the estimated coefficient calculating means (17) comprise a neuron network for transforming, in accordance with a predetermined transform function, the estimates of said cumulants into estimated mixing coefficients $(\hat{\alpha}_{ij})$.

4. A system as claimed in one of the Claims 2 or 3, characterized in that the separation means (10) are means (12K) that have a direct structure and comprise a transformation unit (11) for transforming estimated mixing coefficients $(\hat{\alpha}_{ij})$ into separation coefficients $(C_{ki})$ adapted to the direct structure.

5. A system as claimed in Claim 2 or 3, characterized in that the separation means (10) are means (12) that have a recursive structure and comprise a transformation unit for transforming estimated mixing coefficients $(\hat{\alpha}_{ij})$ into separation coefficients $(-d_{12}, -d_{21})$ adapted to the recursive structure.

6. A source separation method of processing input signals $(E_1(t)..E_n(t))$ formed by instantaneous linear mixtures of primary signals $(x_1(t)...x_n(t))$ that result from sources $(S_l, ... S_n)$ and for producing at least one estimated primary signal $(\hat{X}_1(t))$, which mixtures cause mixing coefficients to occur, the method being carried out with the aid of source separation means (10) which have a number of inputs $(I_1 ... I_n)$ connected to the input signals $(E_1(t) .. E_n(t))$ and at least one output $(R_1)$ for producing the estimated primary signal $(\hat{X}_1(t))$, the method comprising a step of calculating separation coefficients $(C_{kl}...C_{kn})$ used for extracting the estimated primary signals, characterized in that the method comprises:

   - an estimation step (15) for estimating the mixing coefficients based upon input signals $(E_1(+)..E_n(+))$ for obtaining estimated mixing coefficients $(\hat{\alpha}_{ij})$; and
   - a transformation step (11) for transforming the estimated mixing coefficients $(\hat{\alpha}_{ij})$ into separation coefficients $(C_{ki})$.

FIG.1

FIG.2.

$\widehat{\alpha}_{ij}$

11 — DSP

10

$C_{ki}$

12

$E_i(t)$ → SS → $\widehat{X}_k(t)$

FIG.3

$E_j(t)$ — $I_1$ — $C_{k1}$ — 13₁

125

$E_i(t)$ — $I_i$ — $C_{ki}$ — 13i → (+) → $\widehat{X}_k(t)$

$E_n(t)$ — $C_{kn}$ — 13ₙ

$I_n$

12k

FIG.4

$E_1(t)$ → (+) — 112 → $\widehat{X}_1(t)$

111

$-d_{12}$

12

211

$-d_{21}$

212

$E_2(t)$ → (+) → $\widehat{X}_2(t)$

FIG.5

13